(19) **Europäisches Patentamt / European Patent Office / Office européen des brevets**

(11) **EP 4 163 663 A1**

(12) # EUROPEAN PATENT APPLICATION

(43) Date of publication:
**12.04.2023 Bulletin 2023/15**

(21) Application number: **21201984.8**

(22) Date of filing: **11.10.2021**

(51) International Patent Classification (IPC):
**G01S 7/02** (2006.01)   **G01S 7/03** (2006.01)
**G01S 13/931** (2020.01)

(52) Cooperative Patent Classification (CPC):
**G01S 7/027; G01S 7/032; G01S 13/931**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Motherson Innovations Company Limited**
**London EC2N 2AX (GB)**

(72) Inventor: **SEPP, Benjamin**
**77723 Gengenbach (DE)**

(74) Representative: **Westphal, Mussgnug & Partner Patentanwälte mbB**
**Am Riettor 5**
**78048 Villingen-Schwenningen (DE)**

(54) **DEVICE FOR IMPROVING THE TRANSMISSION BEHAVIOR OF RADAR WAVES, EXTERNAL CLADDING COMPONENT OF A VEHICLE AND VEHICLE COMPRISING SUCH AN EXTERNAL CLADDING COMPONENT**

(57) The present disclosure is directed to a device (32) for improving the transmission behavior of radar waves ($\lambda$), comprising a wall section (10) wherein in a first location (22) a first surface (18) and a second surface (20) are located at a first wall thickness distance (dwl) relative to each other, and in a second location (24) the first surface (18) and the second surface (20) are located at a second wall thickness distance (dw2) relative to each other by a first difference ($\Delta 1$), and an equilibration body (34) mounted on the first surface (18) of the wall section (10), in the first location (22) a first body surface (36) and a second surface (20) are located at a first traveling distance (del) relative to each other, in the second location (24) the first body surface (36) and the second surface (20) are located at a second traveling distance (de2) relative to each other, the first traveling distance (del) and the second traveling distance (de2) differ from each other by a second difference ($\Delta 2$), wherein the second difference ($\Delta 2$) is smaller than the first difference ($\Delta 1$). The present disclosure is further directed to an external cladding component of a vehicle and vehicle comprising such an external cladding component.

Fig.2

EP 4 163 663 A1

**Description**

The present disclosure relates to a device for improving the transmission behavior of radar waves and relates to an external cladding component of a vehicle comprising such a device. Moreover, the present disclosure relates to a vehicle comprising such an external cladding component.

To enhance the operational safety, modern vehicles are equipped with a number of assistance systems assisting the vehicle driver. Many assistance systems are based on the monitoring of the surroundings of the vehicle and interact with respective sensors. Based on the situation identified in the surroundings of the vehicle the assistance systems may take action. Such an action may be to generate a signal, e.g., in optical or acoustic form, to draw the driver's attention to a certain situation. Such a situation could be that objects are identified in the surroundings that may collide with the vehicle if no counteractions are taken. Another action may be that the assistance systems initiate a braking manoeuver and/or to intervene in the steering to conduct an evasive manoeuver. The monitoring of the surroundings of a vehicle is a key issue in the autonomous driving.

To monitor the surroundings the sensors may comprise a source for electromagnetic waves that are emitted to the surroundings. In case an object is present in the surroundings the electromagnetic waves are reflected and detected by a respective receiver. The situation in the surroundings of the vehicle can thus be characterized. The degree a certain object reflects the electromagnetic waves amongst others depends on the material the object is made of. Other factors are the size of the object and the effective reflection surface. Consequently, vehicles are equipped with sensors using electromagnetic waves of different wavelength and frequency ranges. One important kind of electromagnetic waves are radar waves. The respective radar sensors comprise a radar source for generating and emitting radar waves and a receiver for receiving the reflected radar waves.

Due to design reasons the sensors are often located behind the external cladding component to be invisible or almost invisible from the exterior. Therefore, the electromagnetic waves emitted by the respective sources have to traverse or penetrate the external cladding component of the vehicle to reach the exterior of the vehicle. In many cases the external cladding components are made of plastics, in particular of thermoplastics that dampen the electromagnetic waves to a certain degree. The more the waves are dampened the smaller is the detection range by which the sensors can monitor the surroundings of the vehicle. The degree by which the electromagnetic waves are dampened depends on several factors, some of which are the wall thickness of the external cladding component and traveling distance. Other factors are the material the external cladding component is made of and the properties of the lacquer or coating applied on the external cladding component and in particular to the finished surface.

Ways to reduce the attenuation of electromagnetic waves are disclosed in DE 100 53 517 A1, DE 198 19 709 A1, DE 10 2018 211 786 A1, DE 102 59 246 A1, WO 2006/042725 A1 and WO 2007/045452 A2.

In almost all cases the external cladding components made of plastics are manufactured by injection molding. The majority of the external cladding components is usually formed by a base body forming a wall section. The wall section comprises a first surface and a second surface. In the following the second surface is the surface visible from outside. The first surface is located at a distance from each other which is often referred to as the wall thickness.

To ensure that the liquid plastic injected into the mold can reach areas located comparatively far away from the injection point of the base body, the wall thickness decreases with increasing distance from the injection point. As mentioned above the attenuation of the radar waves upon penetrating the external cladding component depends on the wall thickness. The radar sensor emits the radar waves within an area that has a shape approximately equaling a cone. Due to the changing wall thickness the attenuation of the radar waves within the cone is different which leads to a poor performance of a given radar sensor among others in respect of the detection range and the resolution accuracy.

It is one task of one embodiment of the present disclosure to present a device for improving the transmission behavior of radar waves by which the above described drawbacks can be eliminated or at least reduced and the performance of the radar sensor be improved.

The task is solved by the features specified in claims 1, 10 and 14. Advantageous embodiments are the subject of the dependent claims.

According to an embodiment according to the present disclosure, a device for improving the transmission behavior of the radar waves comprises

- a wall section having a first surface and a second surface, wherein

    ∘ in a first location the first surface and the second surface are located at a first wall thickness distance relative to each other, and
    ∘ in a second location the first surface and the second surface are located at a second wall thickness distance relative to each other,
    ∘ the first wall thickness distance and the second wall thickness distance differ from each other by a first difference, and

- an equilibration body mounted on the first surface of the wall section, the equilibration body

    ∘ having a first body surface and a second body surface, and
    ∘ being mounted on the first surface of the wall section via the second body surface,

- radar waves that are emitted by a radar sensor when fastened to a mounting section

  ∘ impinge on the first body surface,
  ∘ enter the equilibration body and subsequently the wall section and
  ∘ leave the wall section via the second surface,

- in the first location the first body surface and the second surface are located at a first traveling distance relative to each other,
- in the second location the first body surface and the second surface are located at a second traveling distance relative to each other,
- the first traveling distance and the second traveling distance differ from each other by a second difference,
- the equilibration body being designed and mounted to the wall section such that the second difference is smaller than the first difference.

Usually there are no wall thickness distances between the first location and the second location that either exceed the first wall thickness distance or fall below the second wall thickness distance.

The radar waves emitted by the radar sensor impinge on the first body surface, penetrate the equilibration body and the wall section and enter the surrounding e.g., of a vehicle via the second surface. By means of the equilibration body the second difference is reduced compared to the first difference. As a consequence, the traveling distance of the radar waves through the equilibration body and the wall section and thus the attenuation of the radar waves within the cone mentioned above is optimized which leads to an improved performance of the radar sensor.

A further embodiment may be characterized in that the second difference is zero. In this case the traveling distance of the radar waves penetrating through the equilibration body and the wall section is extensively optimized leading to a high performance of the radar sensor.

In an alternative embodiment the first body surface is plane at least in sections. As mentioned, cladding components of vehicles are often pronouncedly curved also leading to variations in the attenuation of the radar waves. It has been found out that the transmission and reflection behavior of the radar waves is improved when the first body surface is plane.

According to another embodiment the equilibration body is fastened to the wall section by gluing, welding or molding. These ways of fastening the equilibration body to the wall section can be carried out quickly and can be automated.

According to another embodiment the wall section is made of a first plastic and the equilibration body is made of a second plastic, the first plastic and the second plastic being the same plastic or differing from each other. There is no noteworthy limit in the choice of the plastic the equilibration body is made of. The first plastic can be chosen in consideration of its attenuation effect on the radar waves. However, from a manufacturing point of view it may be advantageous when the first plastic is the same as the second plastic which facilitates the fastening process by welding.

According to another embodiment the first traveling distance and the second traveling distance are chosen such that the attenuation of the radar waves is at or near a minimum. It is worth mentioning that the degree of attenuation of the radar waves through a given body does not linearly increase with the traveling distance of the radar waves therethrough. The degree of attenuation approximately follows a sinusoid curve above the traveling distance. The shape of the equilibration body can thus be chosen such that the traveling distance is increased such that the degree of attenuation is decreased. The performance of the radar sensor can thus be improved.

In another embodiment the device comprises a mounting section for mounting a radar sensor, the mounting section either being fastened to the equilibration body or the wall section. A mounting section is needed for mounting a radar sensor. In this embodiment the manufacturer of the device can also provide the same with the mounting section and possibly also fasten the radar sensor to the mounting section shortly after the device is finished and before the device is fastened to a vehicle. The manufacturing process is kept simple.

A further embodiment may be characterized in that the mounting section and the equilibration body or the mounting section and the wall section are made in one piece. The device according to this embodiment may be injection molded such that a large number of devices may be manufactured in a fast and cost-efficient way. It is not necessary to connect the mounting section and the equilibration body or the mounting section and the wall section to each other which on one hand saves a manufacturing step and on the other hand ensures that the mounting section and the equilibration body are precisely positioned to each other.

According to another embodiment the mounting section can comprise an absorption layer or can comprise absorptive material wherein the absorption layer or the absorptive material absorb the radar waves when the radar waves impinge on the mounting section. Depending on the opening angle and the location of the mounting section it may not be avoidable that some radar waves impinge the mounting section. The surface of the mounting section may reflect the radar waves that may reach the radar detector without being reflected by an object in the surroundings of the vehicle. Moreover, some radar waves may be reflected on the first surface. In combination with the radar waves that imping the mounting section multi-reflections may be generated which cause an interfering signal that may lead to misinterpretations. In this embodiment radar waves impinging on the mounting section are absorbed, thereby avoiding interfering signals. The quality of the detection of objects in the surroundings of the vehicle is increased.

A further embodiment of the present disclosure is directed to an external cladding component of a vehicle, comprising

- a base body, and
- a device according to one of the preceding embodiments, the wall section forming a part of the base body.

The technical effects and advantages as discussed with regard to the present device equally apply to the external cladding component. Briefly, the transmission behavior of the radar waves impinging on the base body and penetrating the external cladding component is improved within the cone-shaped area leading to a better performance of the radar sensor mounted to the mounting section.

The device can be fastened to the base body of the cladding component, e.g., by welding or sticking. However, it is also possible to integrate the device into the cladding component such that a fastening step can be omitted.

A further embodiment may be characterized in that the wall section and the base body are formed by the same first plastic. Although the base body and the wall section may be made of different plastics, it may be beneficial to use the same first plastic for both the base body and the wall section. They could then be made in one piece. Moreover, in case they are made as separate pieces they can be fastened to each other by welding.

As mentioned the device can be made by injection molding. The same applies to the base body of the cladding component. However, it is not necessary that the base body is made of the same plastic as the mounting section and the wall section. The base body may have to fulfil requirements that are different from the requirements the mounting section and the wall section need to fulfil. The first plastic and the second plastic may be chosen such that each requirement can be met.

In another embodiment the second surface can be part of the outer surface of the cladding component. In this embodiment the device may be embodied as a bezel, bumper fascia, a grille or the like such that the second surface of the device is visible from outside. In particular when the cladding component is embodied as a bumper the latter usually comprises a plurality of bezels or grilles. In this embodiment the device also fulfils the task of a bezel, a grille or the like, thereby keeping the number of components low.

In accordance with a further embodiment a radar sensor may be fastened to the mounting section. In this embodiment objects in the surroundings of the vehicle can be detected and respective signals generated.

These signals may be used for assisting the driver and/or autonomous driving.

A further embodiment is drawn to a vehicle, comprising an external cladding component according to one of the previous embodiments or a device according to one of the preceding embodiments. The technical effects and advantages as discussed with regard to the present external cladding component equally apply to the vehicle. Briefly the transmission behavior of the radar waves impinging on the base body and penetrating the external cladding component is optimized within the cone-shaped area leading to a better performance of the radar sensor mounted to the mounting section.

The present disclosure is described in detail with reference to the drawings attached wherein

Figure 1     is a principle sectional view of a wall section of an external cladding component of a vehicle according to the prior art,

Figure 2     is a principle sectional view of a wall section of a first embodiment of an external cladding component of a vehicle comprising an equilibration body,

Figure 3     shows the first embodiment of the external cladding component shown in Figure 2 with radar sensors emitting radar waves that penetrate the equilibration body and the wall section,

Figure 4     shows a second embodiment of an external cladding component in which the mounting section is connected to the equilibration body,

Figure 5     shows a third embodiment of an external cladding component in which, like in the second embodiment, the mounting section is connected to the equilibration body,

Figure 6     shows an external cladding component which comprises at least one device according to one of the embodiments shown in Figures 2 to 5, and

Figure 7     shows a principle top view of a vehicle comprising a plurality of external cladding components of the present disclosure.

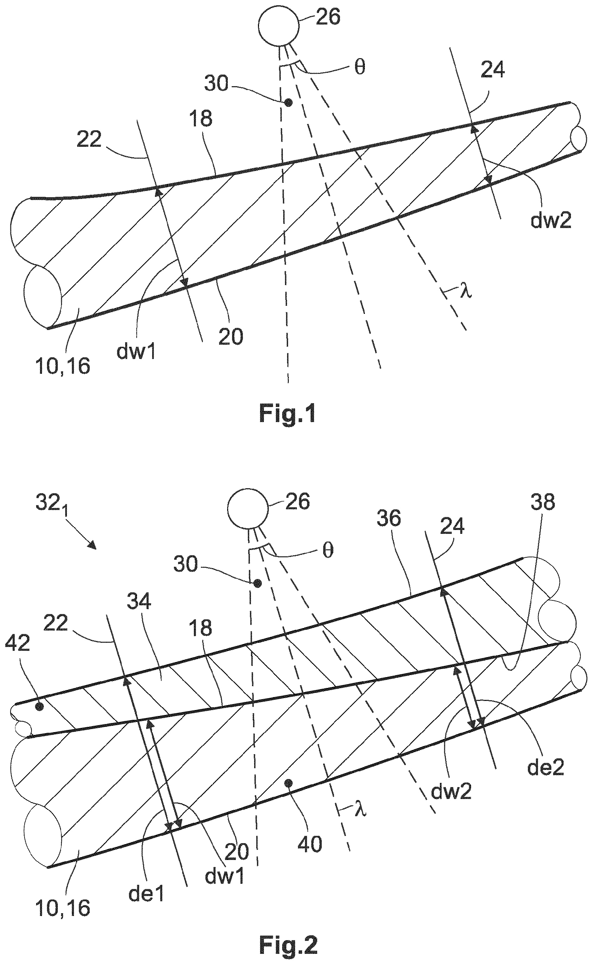

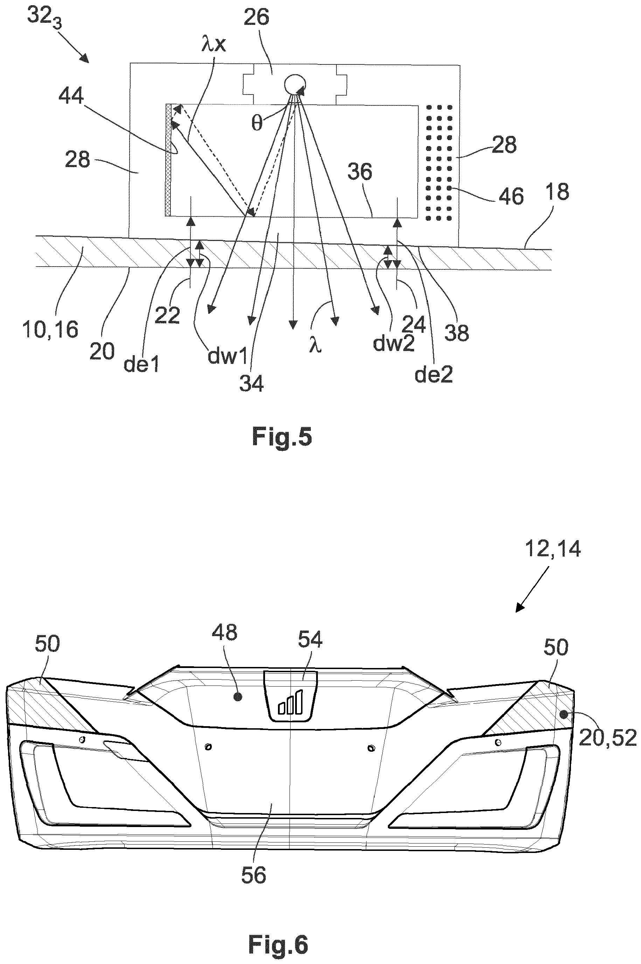

In Figure 1 a wall section 10 in particular of an external cladding component 12 of a vehicle 14 according to the prior art is shown by means of a principle sketch. The wall section 10 may be part of a base body 16 of the external cladding component 12 (see Figure 6). The wall section 10 comprises a first surface 18 and a second surface 20. While the first surface 18 faces the interior of the vehicle 14, the second surface 20 is directed towards the surroundings of the vehicle 14.

In a first location 22 the first surface 18 and the second surface 20 are located at a first wall thickness distance dw1 relative to each other. In a second location 24 the first surface 18 and the second surface 20 are located at a second wall thickness distance dw2 relative to each other. In other words, the wall section 10 has a first wall thickness at the first location 22 and a second wall thickness at a second location 24. The first wall thickness distance dw1 and the second wall thickness distance dw2 differ from each other by a first difference $\Delta 1$ which means that the first wall thickness and the second wall thickness are not equal. As can be seen from Figure 1 the first wall thickness distance dw1 is bigger than the second wall thickness distance dw2. From the left to the right of Figure 1 the wall thickness of the wall section 10 is continuously decreasing. Between the first location 22 and the second location 24 there are no wall thickness distances that either exceed the first wall thickness distance dw1 or fall below the second wall thickness distance dw2.

The first difference $\Delta 1$ may also be expressed by following equation:

$$\Delta 1 = |dw1 - dw2|$$

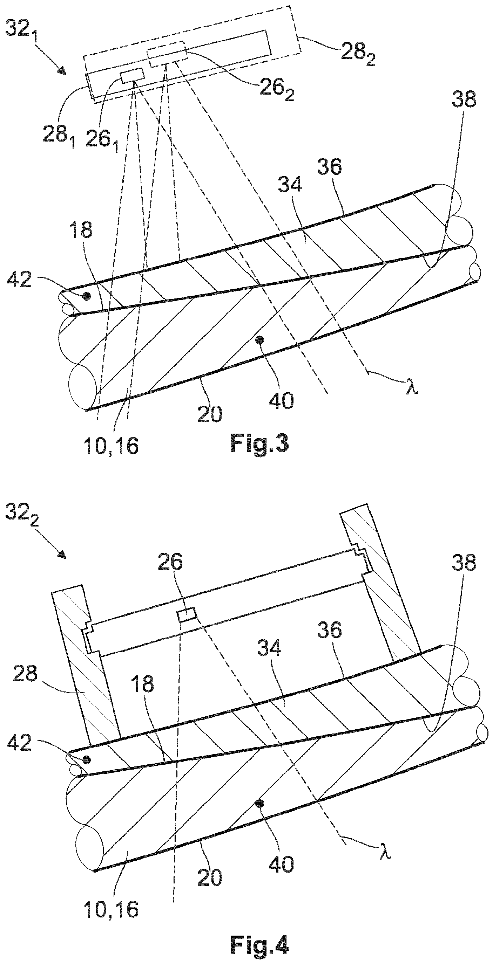

A radar sensor 26 creates radar waves $\lambda$ that are emitted within a cone-shaped area 30 with a given opening angle $\theta$. The radar waves $\lambda$ emitted by a radar sensor 26 first impinge on the first surface 18, penetrate the wall section 10 and then enter the surroundings via the second surface 20. The radar sensors 26 is mounted on a mounting section 28 which is not shown in Figure 1 (cf. Figure 4). The mounting section 28 may be formed by the chassis of the vehicle 14 (not shown).

When the radar waves $\lambda$ penetrate the wall section 10 the radar waves are attenuated by the material of the wall section 10. What is more is that the external cladding components 12 of vehicles 14 are usually curved which is also the case in the wall section 10 shown in Figure 1 although the respective curvature is not particularly pronounced. Due to the curvature each of the radar waves $\lambda$ hit the first surface 18 by a different angle of incidence. Both the changing wall thickness and the curvature negatively affect the transmission behavior of the radar waves $\lambda$ traversing external cladding component 12 leading to a poor performance of the radar sensor 26.

Figure 2 shows a first embodiment of the inventive device $32_1$ for improving the transmission behavior of radar waves $\lambda$ that are emitted by the radar sensors 26. The wall section 10 of the device $32_1$ is identical to the one shown in Figure 1. An equilibration body 34 is fastened to the wall section 10. The equilibration body 34 comprises a first body surface 36 and a second body surface 38. The first body surface 36 is facing the radar sensors 26 while the second body surface 38 is in contact with the first surface 18 of the wall section 10. The equilibration body 34 may be fastened to the wall section 10 e.g., by gluing, welding or molding. However, other ways of fastening are conceivable.

In the first location 22 the first body surface 36 and the second surface 20 are located at a first traveling distance de1 relative to each other. In the second location 24 the first body surface 36 and the second surface 20 are located at a second traveling distance de2 relative to each other. The first traveling distance de1 and the second traveling distance de2 may also be regarded as the sum of the respective wall thicknesses of the wall section 10 and the equilibration body 34. The first traveling distance de1 and the second traveling distance de2 differ from each other by a second difference $\Delta 2$.

The second difference $\Delta 2$ may also be expressed by the following equation:

$$\Delta 2 = |de1 - de2|$$

The equilibration body 34 is designed such that the second difference $\Delta 2$ is smaller than the first difference $\Delta 1$. The radar waves $\lambda$ emitted from the radar sensors 26 first impinge on the first body surface 36, penetrate the equilibration body 34 and subsequently the wall section 10 before they enter the surroundings in particular of the vehicle 14 via the second surface 20. Due to the fact that the second difference $\Delta 2$ is smaller than the first difference $\Delta 1$ the traveling distance of the radar waves $\lambda$ through the equilibration body 34 and the wall section 10 differs to a significantly minor degree compared to the traveling distance of the radar waves $\lambda$ only penetrating the wall section 10 as shown in Figure 1. By means of the equilibration body 34 the transmission behavior of the radar waves $\lambda$ and thus the performance of the radar sensors 26 are improved.

As mentioned earlier, the degree of attenuation of the radar waves $\lambda$ approximately follows a sinusoid curve as a function of the traveling distance, in this case in particular the first traveling distance de1 and the second traveling distance de2. The equilibration body 34 can be designed not only to minimize the second difference $\Delta 2$ but also to increase the first traveling distance de1 and the second traveling distance de2 such that the attenuation of the radar waves $\lambda$ is at or close to a minimum of the sinusoid curve. As the slope of a sinusoid curve in the area of the minimum (or maximum) is small, differences in the traveling distance up to a certain degree only have a minor effect on the attenuation of the radar waves $\lambda$. Variations of the first wall thickness dw1 and the second wall thickness dw2 as well as in the size of the equilibration body 34 which may be caused by manufacturing inaccuracies may in this case be acceptable.

In Figure 3 the device $32_1$ is shown with a first radar sensor $26_1$ and a second radar sensor $26_2$ mounted on a first mounting section $28_1$ and a second mounting section $28_2$, respectively. The first radar sensor $26_1$ and

the first mounting section $28_1$ as well as the second radar sensors $26_2$ are shown in a very simplified way. The first radar sensors $26_1$ and the first mounting section $28_1$ are illustrated by solid lines whereas the second radar sensors $26_2$ and the second mounting section $28_2$ are illustrated by dashed lines. Which one of the radar sensors 26 is used may depend on the configuration of the vehicle 14. While the first radar sensors $26_1$ may be used in a low cost configuration of the vehicle 14 the second radar sensor $26_2$ may be used in a configuration suitable for autonomous driving.

The first radar sensor $26_1$ and the second radar sensor $26_2$ differ in size. The first mounting section $28_1$ and the second mounting section $28_2$ not only differ in size but also in their position relative to the device $32_1$. As a consequence, the position of the area via which the first radar sensor $26_1$ and the second radar sensor $26_2$ emit the radar waves $\lambda$ differs relative to the device $32_1$. Regardless of these differences the device $32_1$ generates an improved transmission behavior as long as the radar waves $\lambda$ emitted by the first radar sensors $26_1$ and the second radar sensors $26_2$ impinge the equilibration body 34. The device $32_1$ is thus fairly insensitive towards the mentioned differences and thus versatilely applicable.

This insensitivity is not only beneficial in the described case of two radar sensors $26_1$, $26_2$ but also in case of one radar sensor 26 only. It is not necessary to fasten the radar sensor 26 to the mounting section 28 with high precision which facilitates and accelerates the fastening. Moreover, the positon of the radar sensor 26 relative to the device $32_1$ may change in operation of the vehicle. The change in position does not have a significant influence on the transmission behavior and thus the performance of the radar sensor 26.

Figure 4 shows a second embodiment of the inventive device $32_2$. The mounting section 28 to which the radar sensors 26 is mounted is fastened to the equilibration body 34. The wall section 10 and the equilibration body 34 may have the same constitution as in the first embodiment of the device $32_1$. The wall section 10 is made of a first plastic 40 and the equilibration body 34 is made of a second plastic 42. The first plastic 40 may differ from the second plastic 42. However, it may be advantageous if the first plastic 40 and the second plastic 42 are the same, in particular if the equilibration body 34 is fastened to the wall section 10 by welding.

The mounting section 28 may be made of the same first plastic 40 as the equilibration body 34 which also facilitates the fastening of the mounting section 28 to the equilibration body 34 as mentioned above. However, it is also possible to fasten the mounting section 28 to the wall section 10. In this case it may be beneficial to manufacture the mounting section 28 of the same second plastic 42 as the wall section 10. However, it is also possible to use three different plastics for the mounting section 28, the equilibration body 34 and the wall section 10.

Figure 5 shows a third embodiment of the inventive device $32_3$. In this case the mounting section 28 and the equilibration body 34 are made in one piece. Moreover, the first surface 18 is plane and the second difference $\Delta 2$ is zero.

It can be seen from Figure 5 that at least a part of the radar waves $\lambda$ that impinge on the first body surface 36 are reflected. The reflected radar waves $\lambda$ are denominated with $\lambda x$. The reflected radar waves $\lambda x$ impinge on the mounting section 28, from the mounting section 28 back to the first body surface 36 and from the first surface 18 to the radar sensors 26. The reflected radar waves $\lambda x$ may cause interfering signals in the radar sensors 26. To avoid such interfering signals the mounting section 28 comprises an absorption layer 44 on which the radar waves $\lambda x$ impinge (see left hand side of the mounting section 28 of Figure 5). Radar waves $\lambda x$ impinging on the absorption layer 44 are absorbed. The radar waves $\lambda x$ that are illustrated by the dashed lines are cancelled and therefore cannot create interfering signals.

It is worth mentioning that in Figure 5 the radar waves $\lambda x$ are only shown to explain the creation of interfering signals. In operation of the device $32_3$ a plurality of reflected radar waves $\lambda x$ is expected.

Instead of an absorption layer 44 it is also possible to use an absorption material 46 that is added to the plastic the mounting section 28 is made of (see right hand side of the mounting section 28 of Figure 5). Radar waves $\lambda x$ impinging on the mounting section 28 comprising the absorption material 46 are not reflected to avoid interfering signals (not shown). The result is the same as in case an absorption layer 44 is used.

Figure 6 shows an external cladding component 12 of a vehicle 14, in this case a front bumper 48. The front bumper 48 comprises two bezels 50 that are indicated by hatched areas. Each bezel 50 may be formed by a device $32_1$, $32_2$ according to the first or second embodiment (not shown in Figure 6). In this case the second surface 20 of the device $32_1$, $32_2$ forms a part of an outer surface 52 of the cladding component 12.

A brand logo 54 of a given vehicle manufacturer is located in the upper center of the front bumper 48. The brand logo 54 may be formed by the device $32_1$ - $32_3$ according to one of the embodiments described above. The same may apply to a grille 56 that is integrated into the front bumper 48.

A number of devices $32_3$ e.g. according to the third embodiment may be fastened to the front bumper 48 at any desired location.

It should be noted that it is not necessary that the front bumper 48 comprises a bezel 50. The devices $32_1$ to $32_3$ may also be mounted on a coated bumper fascia.

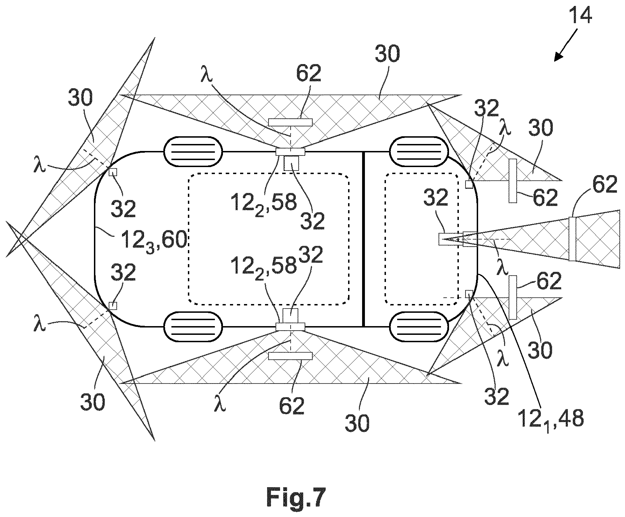

Figure 7 shows a top view of a vehicle 14 being equipped with a plurality of external cladding components 12 to which one or more of the devices 32 according to one of the embodiments previously described may be fastened. A first external cladding component $12_1$ is embodied as a front bumper 48 such as shown in Figure 6.

Moreover, two second external cladding components $12_2$ are embodied as B-pillar 58 claddings. A third external cladding component $12_3$ is embodied as a rear bumper 60. The radar sensors 26 of the devices 32 may observe an object 62 in the surroundings of the vehicle 14 in case it is located within the cone-shaped area 30.

Reference list

| 10 | wall section |
|---|---|
| 12 | cladding component |
| $12_1 - 12_3$ | cladding component |
| 14 | vehicle |
| 16 | base body |
| 18 | first surface |
| 20 | second surface |
| 22 | first location |
| 24 | second location |
| 26 | radar sensor |
| $26_1, 26_2$ | radar sensor |
| 28 | mounting section |
| $28_1, 28_2$ | mounting section |
| 30 | cone-shaped area |
| 32 | device |
| $32_1 - 32_3$ | device |
| 34 | equilibration body |
| 36 | first body surface |
| 38 | second body surface |
| 40 | first plastic |
| 42 | second plastic |
| 44 | absorption layer |
| 46 | absorptive material |
| 48 | front bumper |
| 50 | bezel |
| 52 | outer surface |
| 54 | brand logo |
| 56 | grille |
| 58 | B-pillar |
| 60 | rear bumper |
| 62 | object |

| dw1 | first wall thickness distance |
|---|---|
| dw2 | second wall thickness distance |
| de1 | first traveling distance |
| de2 | second traveling distance |
| $\Delta 1$ | first difference |
| $\Delta 2$ | second difference |
| $\lambda$ | radar waves |
| $\lambda x$ | reflected radar waves |
| $\theta$ | opening angle |

**Claims**

1. Device (32) for improving the transmission behavior of radar waves ($\lambda$), comprising

- a wall section (10) having a first surface (18) and a second surface (20), wherein

  ○ in a first location (22) the first surface (18) and the second surface (20) are located at a first wall thickness distance (dw1) relative to each other, and
  ○ in a second location (24) the first surface (18) and the second surface (20) are located at a second wall thickness distance (dw2) relative to each other,
  ○ the first wall thickness distance (dw1) and the second wall thickness distance (dw2) differ from each other by a first difference ($\Delta 1$), and

- an equilibration body (34) mounted on the first surface (18) of the wall section (10), the equilibration body (34)

  ○ having a first body surface (36) and a second body surface (38), and
  ○ being mounted on the first surface (18) of the wall section (10) via the second body surface (38),

- radar waves ($\lambda$) that are emitted by a radar sensor (26) when fastened to a mounting section (28)

  ○ impinge on the first body surface (36),
  ○ enter the equilibration body (34) and subsequently the wall section (10) and
  ○ leave the wall section (10) via the second surface (20),

- in the first location (22) the first body surface (36) and the second surface (20) are located at a first traveling distance (del) relative to each other,
- in the second location (24) the first body surface (36) and the second surface (20) are located at a second traveling distance (de2) relative to each other,
- the first traveling distance (del) and the second traveling distance (de2) differ from each other by a second difference ($\Delta 2$),
- the equilibration body (34) being designed and mounted to the wall section (10) such that the second difference ($\Delta 2$) is smaller than the first difference ($\Delta 1$).

2. Device (32) according to claim 1, **characterized in that** the second difference ($\Delta 2$) is zero.

3. Device (32) according to one of the claims 1 or 2, **characterized in that** the first body surface (36) is plane at least in sections.

4. Device (32) according to one of the preceding claims, **characterized in that** the equilibration body (34) is fastened to the wall section (10) by gluing, welding or molding.

5. Device (32) according to one of the preceding claims, **characterized in that** the wall section (10) is made of a first plastic (40) and the equilibration body (34) is made of a second plastic (42), the first plastic (40) and the second plastic (42) being the same plastic or differing from each other.

6. Device (32) according to one of the preceding claims, **characterized in that** the first traveling distance (del) and the second traveling distance (de2) are chosen such that the attenuation of the radar waves ($\lambda$) is at or near a minimum.

7. Device (32) according to one of the preceding claims, **characterized in that** the device (32) comprises a mounting section (28) for mounting a radar sensor (26), the mounting section (28) either being fastened to the equilibration body (34) or the wall section (10).

8. Device (32) according to claim 7, **characterized in that**

   - the mounting section (28) and the equilibration body (34) or
   - the mounting section (28) and the wall section (10) are made in one piece.

9. Device (32) according to one of the preceding claims, **characterized in that** the mounting section (28) comprises an absorption layer (44) or comprises absorptive material (46) wherein the absorption layer (44) or the absorptive material (46) absorb the radar waves ($\lambda$) when the radar waves ($\lambda$) impinge on the mounting section (28).

10. External cladding component (12) of a vehicle (14), comprising

    - a base body (16), and
    - a device (32) according to one of the preceding claims, the wall section (10) forming a part of the base body (16).

11. External cladding component (12) according to claim 10, **characterized in that** the wall section (10) and the base body (16) are formed of the same first plastic (40).

12. External cladding component (12) according to one of the claims 10 or 11, **characterized in that** the second surface (20) is part of an outer surface (52) of the cladding component (12).

13. External cladding component (12) according to one of the claims 9 to 11, **characterized in that** a radar sensor (26) is fastened to the mounting section (28).

14. Vehicle (14), comprising an external cladding component (12) according to one of the claims 10 to 13 or a device (32) according to one of the claims 1 to 9.

**Fig.1**

**Fig.2**

**Fig.3**

**Fig.4**

Fig.5

Fig.6

Fig.7

Europäisches
Patentamt

European
Patent Office

Office européen
des brevets

# EUROPEAN SEARCH REPORT

Application Number

EP 21 20 1984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 902 902 A1 (DECOMA GERMANY GMBH [DE]) 26 March 2008 (2008-03-26) * figures 1a-1d * * paragraphs [0029], [0031], [0041], [0042] * | 1-9 | INV. G01S7/02 G01S7/03 G01S13/931 |
| X | EP 3 644 087 A1 (TOYODA GOSEI KK [JP]) 29 April 2020 (2020-04-29) * figures 1,2a,3a,3b * * paragraphs [0023] - [0028] * * paragraphs [0032], [0038] - [0044], [0048] - [0050] * | 1,6-14 | |
| A | EP 3 107 151 A1 (VOLVO CAR CORP [SE]) 21 December 2016 (2016-12-21) * figures 2-5 * * paragraphs [0039] - [0042] * | 1-14 | |

TECHNICAL FIELDS
SEARCHED (IPC)

G01S

The present search report has been drawn up for all claims

| Place of search | Date of completion of the search | Examiner |
|---|---|---|
| Munich | 16 March 2022 | Unterberger, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 1984

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2022

| Patent document cited in search report | | | Publication date | Patent family member(s) | | | Publication date |
|---|---|---|---|---|---|---|---|
| EP 1902902 | A1 | | 26-03-2008 | DE | 102006046436 | B3 | 30-04-2008 |
| | | | | EP | 1902902 | A1 | 26-03-2008 |
| EP 3644087 | A1 | | 29-04-2020 | CN | 111158016 | A | 15-05-2020 |
| | | | | EP | 3644087 | A1 | 29-04-2020 |
| | | | | JP | 2020067291 | A | 30-04-2020 |
| | | | | US | 2020124701 | A1 | 23-04-2020 |
| EP 3107151 | A1 | | 21-12-2016 | CN | 106257304 | A | 28-12-2016 |
| | | | | EP | 3107151 | A1 | 21-12-2016 |
| | | | | US | 2016370456 | A1 | 22-12-2016 |

EPO FORM P0459

For more details about this annex : see Official Journal of the European Patent Office, No. 12/82

**REFERENCES CITED IN THE DESCRIPTION**

**Patent documents cited in the description**

- DE 10053517 A1
- DE 19819709 A1
- DE 102018211786 A1

- DE 10259246 A1
- WO 2006042725 A1
- WO 2007045452 A2